# EUROPEAN PATENT APPLICATION

(11) **EP 4 501 101 A1**
(43) Date of publication of application: **05.02.2025**
(21) Application number: 23780523.9
(22) Date of filing: 28.03.2023
(51) Int. Cl.: A01G 18/20

(54) **ADDITIVE FOR MUSHROOM CULTIVATION MEDIUM, MUSHROOM CULTIVATION MEDIUM, MUSHROOM CULTIVATION METHOD, ADDITIVE FOR BASIDIOMYCETE CULTIVATION MEDIUM, BASIDIOMYCETE CULTIVATION MEDIUM AND BASIDIOMYCETE CULTIVATION METHOD**

(30) Priority: 29.03.2022 JP 2022053195
(71) Applicant: Amino Up Co., Ltd., Sapporo-shi Hokkaido 004-0839 (JP)
(72) Inventor: OSUMI, Arisa, Sapporo-shi, Hokkaido 004-0839 (JP); GOTO, Kazunori, Sapporo-shi, Hokkaido 004-0839 (JP)
(74) Representative: Wasner, Marita
(86) International application number: PCT/JP2023/012510
(87) International publication number: WO 2023/190514

(57) **Abstract**

An additive for a mushroom cultivation medium that contains a processed Kuding tea product. The additive for a mushroom cultivation medium promotes the growth of mushroom mycelia. The additive for a mushroom cultivation medium improves the quality of mushroom fruit bodies. The additive for a mushroom cultivation medium increases the yield of mushroom fruit bodies.

## Description

### TECHNICAL FIELD

The present invention relates to an additive for a mushroom cultivation medium, a medium for mushroom cultivation, a method for cultivating a mushroom, an additive for a basidiomycete culture medium, a medium for a basidiomycete culture, and a method for culturing a basidiomycete.

### BACKGROUND ART

Mushrooms are rich in dietary fibers and have low calories, and thus, have become a food material preferred by consumers in recent years with an increase in health consciousness.

Various methods for cultivating mushrooms have been proposed, and cultivation methods using plant-derived components have been paid attention with recent natural intention of consumers.

Non-Patent Literature 1 discloses that saponin, which is a component contained in green tea, black tea, oolong tea, or the like, promotes the formation of fruiting bodies of oyster mushrooms. In addition, Non-Patent Literature 2 discloses that saponin contained in camellia oil cake promotes mycelial elongation of eryngii mushroom and oyster mushroom, and promotes fruiting body formation of enokitake mushroom and eryngii mushroom.

### CITATIONS LIST

### NON-PATENT LITERATURE

Non-Patent Literature 1: Yumi MAGAE, Mushroom Science and Biotechnology, Vol. 20(4), 193 to 198, 2013
Non-Patent Literature 2: Hajime MAEDA et al., 124th Annual Meeting of The Japanese Forest Society, Session ID: P1-158, Effects of saponins contained oil cakes of Camellia japonica on hyphal extension and fruit body formation of five edible fungi, 2013

### SUMMARY OF INVENTION

### TECHNICAL PROBLEMS

However, in the method of Non-Patent Literature 1, although it is found that saponin has the effect of promoting fruiting body formation of oyster mushroom, a problem remains in that the quality of fruiting bodies themselves is deteriorated due to the suppression of pileus formation as the number of fruiting bodies increases, resulting in the formation of fruiting bodies having a low commercial value. In addition, Non-Patent Literature 2 discloses the effect of promoting mycelial elongation and fruiting body formation by saponin contained in camellia oil cake, but the effect of improving the quality of fruiting bodies is not clarified.

The present invention has been made in view of the above circumstances, and an object of the present invention is to provide an additive for a mushroom cultivation medium, a medium for mushroom cultivation, and a method for cultivating a mushroom, which can improve the quality of a fruiting body of a mushroom and increase a yield amount of fruiting bodies of mushrooms, as well as an additive for a basidiomycete culture medium, a medium for a basidiomycete culture, and a method for culturing a basidiomycete, which can effectively promote the growth of a mycelium of a basidiomycete.

### SOLUTIONS TO PROBLEMS

To achieve the above object, an additive for a mushroom cultivation medium according to a first aspect of the present invention includes
a processed product of Ku Ding tea.

For example, it is an additive for a mushroom cultivation medium for promoting the growth of mycelia of mushrooms.

For example, it is an additive for a mushroom cultivation medium for improving the quality of fruiting bodies of mushrooms.

For example, it is an additive for a mushroom cultivation medium for increasing the amount of fruiting bodies of mushrooms developed.

For example, the Ku Ding tea is selected from the group consisting of Ligustrum purpurascens Y. C. Yang., Ligustrum pedunculare Rehd., Ligustrum japonicum var. pubescens Koidz, Ligustrum robstum (Roxb.) Bl., Ilex cornuta Lindl. ex Paxt., Ilex kudingcha C. J. Tseng., Ilex latifolia Thunb., Cratoxylum prunifolium (Kurz) Dyer, Ehretia thyrsiflora (Sieb. et Zucc.) Nakai, and Photinia serrulata Lindl.

For example, the mushroom is selected from the group consisting of shiitake mushroom, enokitake mushroom, Pholiota aurivella, Sarcomyxa serotina, Pleurotus pulmonarius, Ganoderma applanatum, oyster mushroom, golden oyster mushroom, pink oyster mushroom, Lepista sordida, Hypsizygus marmoreus, eryngii mushroom, Jew's Ear Fungus, butterscotch mushroom, hen-of-the-woods, common mushroom, Lyophyllum decastes, Mycoleptodonoides aitchisonii, Hypholoma sublateritium, Lion's mane mushroom, Cyclocybe aegerita, Ganoderma lucidum (Leyss. ex. Fr.) Karst, Pleurotus sajo-caju (Fr.), Trametes versicolor, Sparassis crispa, Tricholoma bakamatsutake, Agaricus subrufescens, Morchella esculenta var. esculenta, and Inonotus obliquus.

A medium for mushroom cultivation according to a second aspect of the present invention is
a medium for mushroom cultivation to which the additive for a mushroom cultivation medium according to the first aspect of the present invention is added.

A method for cultivating a mushroom according to a third aspect of the present invention includes
a step of culturing a mycelium of a mushroom using the medium for mushroom cultivation according to the second aspect of the present invention.

A method for cultivating a mushroom according to a fourth aspect of the present invention includes
a step of developing a fruiting body of a mushroom using the medium for mushroom cultivation according to the second aspect of the present invention.

An additive for a basidiomycete culture medium according to a fifth aspect of the present invention contains a processed product of Ku Ding tea.

For example, it is an additive for a basidiomycete culture medium for promoting the growth of a mycelium of a basidiomycete.

For example, the Ku Ding tea is selected from the group consisting of Ligustrum purpurascens Y. C. Yang., Ligustrum pedunculare Rehd., Ligustrum japonicum var. pubescens Koidz, Ligustrum robstum (Roxb.) Bl., Ilex cornuta Lindl. ex Paxt., Ilex kudingcha C. J. Tseng., Ilex latifolia Thunb., Cratoxylum prunifolium (Kurz) Dyer, Ehretia thyrsiflora (Sieb. et Zucc.) Nakai, and Photinia serrulata Lindl.

For example, the basidiomycete is selected from the group consisting of shiitake mushroom, enokitake mushroom, Pholiota aurivella, Sarcomyxa serotina, Pleurotus pulmonarius, Ganoderma applanatum, oyster mushroom, golden oyster mushroom, pink oyster mushroom, Lepista sordida, Hypsizygus marmoreus, eryngii mushroom, Jew's Ear Fungus, butterscotch mushroom, hen-of-the-woods, common mushroom, Lyophyllum decastes, Mycoleptodonoides aitchisonii, Hypholoma sublateritium, Lion's mane mushroom, Cyclocybe aegerita, Ganoderma lucidum (Leyss. ex. Fr.) Karst, Pleurotus sajo-caju (Fr.), Trametes versicolor, Sparassis crispa, Tricholoma bakamatsutake, Agaricus subrufescens, and Inonotus obliquus.

A medium for a basidiomycete culture according to a sixth aspect of the present invention is
a medium for a basidiomycete culture to which the additive for a basidiomycete culture medium according to the fifth aspect of the present invention is added.

A method for culturing a basidiomycete according to a seventh aspect of the present invention includes
a step of culturing a mycelium of a basidiomycete using the medium for a basidiomycete culture according to the sixth aspect of the present invention.

### ADVANTAGEOUS EFFECTS OF INVENTION

According to the present invention, there can be provided an additive for a mushroom cultivation medium, a medium for mushroom cultivation, and a method for cultivating a mushroom, which can improve the quality of a fruiting body of a mushroom and increase a yield amount of fruiting bodies of mushrooms, as well as an additive for a basidiomycete culture medium, a medium for a basidiomycete culture, and a method for culturing a basidiomycete, which can effectively promote the growth of a mycelium of a basidiomycete.

### BRIEF DESCRIPTION OF DRAWINGS

Figs. 1(a) and 1(b) are graphs showing an influence of addition of a processed product of Ku Ding tea of a present Example on elongation of mycelia of mushrooms, in which Fig. 1(a) is a graph of golden oyster mushroom, and Fig. 1(b) is a graph of Pholiota aurivella.
Fig. 2 is a graph showing an influence of addition of the processed product of Ku Ding tea of the present Example on growth of mycelia of shiitake mushroom.
Fig. 3 is a graph showing an influence of addition of the processed product of Ku Ding tea of the present Example on growth of mycelia of hen-of-the-woods.
Fig. 4 is a graph showing an influence of addition of the processed product of Ku Ding tea of the present Example on elongation of mycelia of Cloud ear fungus.
Fig. 5 is a schematic illustration of steps of mycelial culture, fruiting body development, and water immersion (addition of a processed product of Ku Ding tea) in the cultivation of shiitake mushroom in the present Example.
Fig. 6 is a schematic illustration of steps of mycelial culture, fruiting body development, and water immersion (addition of a processed product of Ku Ding tea) in the cultivation of shiitake mushroom in the present Example.
Fig. 7(a) is a schematic illustration of steps of mycelial culture, fruiting body development, and water immersion (addition of a processed product of Ku Ding tea) in the cultivation of shiitake mushroom in the present Example, and Fig. 7(b) is a graph showing an influence of addition of the processed product of Ku Ding tea of the present Example on a yield amount and quality of fruiting bodies of shiitake mushroom.
Fig. 8(a) is a schematic illustration of steps of mycelial culture, fruiting body development, and water immersion (addition of a processed product of Ku Ding tea) in the cultivation of shiitake mushroom in the present Example, and Fig. 8(b) is a graph showing an influence of addition of the processed product of Ku Ding tea of the present Example on a yield amount of fruiting bodies of shiitake mushroom.
Fig. 9(a) is a schematic illustration of steps of mycelial culture (addition of a processed product of Ku Ding tea), fruiting body development, and water immersion in the cultivation of shiitake mushroom in the present Example, and Fig. 9(b) is a graph showing an influence of addition of the processed product of Ku Ding tea different from the form of the present Example on an average weight of fruiting bodies of shiitake mushroom.
Fig. 10(a) is a schematic illustration of steps of mycelial culture (addition of a processed product of Ku Ding tea) and harvesting in the cultivation of hen-of-the-woods in the present Example, and Fig. 10(b) is a graph showing an influence of addition of the processed product of Ku Ding tea of the present Example on a yield amount of fruiting bodies of hen-of-the-woods.

### DESCRIPTION OF EMBODIMENTS

### (1. Additive for a mushroom cultivation medium)

First, an additive for a mushroom cultivation medium according to the present invention will be described in detail.

The additive for a mushroom cultivation medium according to the present invention contains a processed product of Ku Ding tea. When the additive for a mushroom cultivation medium of the present invention is used for mushroom cultivation, as described below, it is possible to obtain at least one of (i) an effect of promoting the growth of a mycelium of a mushroom, (ii) an effect of improving the quality of a fruiting body of a mushroom, and (iii) an effect of increasing the amount of fruiting bodies of mushrooms developed, or (i) and (ii), (ii) and (iii), (i) and (iii), or all of the effects of (i) to (iii).

As the Ku Ding tea to be used for the additive for a mushroom cultivation medium of the present invention, any type of Ku Ding tea can be used without particular limitation, and for example, Ligustrum purpurascens Y. C. Yang. (Oleaceae), Ligustrum pedunculare Rehd. (Oleaceae), Ligustrum japonicum var. pubescens Koidz (Oleaceae), Ligustrum robstum (Roxb.) Bl. (Oleaceae), Ilex cornuta Lindl. ex Paxt. (Aquifoliaceae), Ilex kudingcha C. J. Tseng. (Aquifoliaceae), Ilex latifolia Thunb. (Aquifoliaceae), Cratoxylum prunifolium (Kurz) Dyer (Hypericaceae), Ehretia thyrsiflora (Sieb. et Zucc.) Nakai (Boraginaceae), or Photinia serrulata Lindl. (Rosaceae) can be used. For example, it is possible to suitably use Ligustrum purpurascens Y. C. Yang, Ligustrum pedunculare Rehd., Ligustrum japonicum var. pubescens Koidz, and Ligustrum robustum (Roxb.) Bl., which belong to the family Oleaceae, or Ilex kudingcha C. J. Tseng which belongs to the family Aquifoliaceae, and it is further preferable to use Ligustrum purpurascens Y. C. Yang or Ilex kudingcha C. J. Tseng.

The additive for a mushroom cultivation medium of the present invention contains the processed product of Ku Ding tea, and it is not desired to be bound by a specific theory, but it is considered that components other than triterpene and glycoside thereof (saponin) contained in the processed product of Ku Ding tea exhibit (i) an effect of promoting the growth of a mycelium of a mushroom, (ii) an effect of improving the quality of a fruiting body of a mushroom, or (iii) an effect of increasing the amount of fruiting bodies of mushrooms developed, which will be described below.

The processed product of Ku Ding tea to be used in the present invention is not particularly limited as long as it is obtained by subjecting a tea leaf of Ku Ding tea to some treatment or processing, and for example, it may be an extraction liquid obtained by extracting a dried leaf of Ku Ding tea with water at a predetermined temperature for a predetermined time (for example, extraction with hot water at 110 to 130°C for 10 to 30 minutes, extraction with warm water at 50 to 70°C for 50 to 70 minutes, or the like), may be a dried leaf itself of Ku Ding tea or a powdered dried leaf, or may be an extraction liquid obtained by extracting a dried leaf of Ku Ding tea with a solvent (for example, ethanol) or a mixed liquid of water and a solvent for a predetermined time. A commercially available processed product of Ku Ding tea may be used. Only one kind of Ku Ding tea (for example, only Ligustrum purpurascens Y. C. Yang) may be used for the processed product of Ku Ding tea, or two or more kinds of Ku Ding tea may be used therefor.

The additive for a mushroom cultivation medium of the present invention is used by being added to a medium for mushroom cultivation (described below). The addition amount of the additive for a mushroom cultivation medium to the medium for mushroom cultivation when directly added to the medium is, for example, 0.00001 to 20 mass%, preferably 0.00005 to 15 mass%, more preferably 0.0001 to 10 mass%, and even more preferably 0.0005 to 5 mass% in 100 mass% in terms of the solid content concentration of the processed product of Ku Ding tea. In addition, in a liquid additive for a mushroom cultivation medium in which an artificial medium is immersed, the solid content concentration of the processed product of Ku Ding tea in the additive is, for example, 0.00005 to 20 mass%, preferably 0.0001 to 15 mass%, more preferably 0.0005 to 10 mass%, and even more preferably 0.001 to 5 mass% in 100 mass%.

The kind of mushroom to which the additive for a mushroom cultivation medium of the present invention can be applied is not particularly limited, and is selected from the group consisting of shiitake mushroom, enokitake mushroom, Pholiota aurivella, Sarcomyxa serotina, Pleurotus pulmonarius, Ganoderma applanatum, oyster mushroom, golden oyster mushroom, pink oyster mushroom, Lepista sordida, Hypsizygus marmoreus, an eryngii mushroom, Jew's Ear Fungus, butterscotch mushroom, hen-of-the-woods, common mushroom, Lyophyllum decastes, Mycoleptodonoides aitchisonii, Hypholoma sublateritium, Lion's mane mushroom, Cyclocybe aegerita, Ganoderma lucidum (Leyss. ex. Fr.) Karst, Pleurotus sajo-caju (Fr.), Trametes versicolor, Sparassis crispa, Tricholoma bakamatsutake, Agaricus subrufescens, Morchella esculenta var. esculenta, and Inonotus obliquus.

Examples of the medium for mushroom cultivation to which the additive for a mushroom cultivation medium of the present invention is added include an artificial medium to be used for mushroom bed cultivation, compost cultivation, or the like, a log to be used for log cultivation, and an agar medium or a liquid medium to be used for culture of mycelia. Examples of the artificial medium include a general mushroom bed medium containing wood base materials such as chips and sawdust, nutrients such as rice bran, bran, mineral, or organic acid, and an appropriate amount of water, and a compost medium containing a compost mixture. Further, as the log to be used for the log cultivation, a log (for example, Quercus serrata, Atractylodes lugens, or the like) suitable for each variety of mushrooms can be used.

Examples of the method for applying the additive for a mushroom cultivation medium of the present invention to the medium for mushroom cultivation include, when the medium is an artificial medium, a method in which the additive for a mushroom cultivation medium is added to and mixed with the artificial medium, a method in which the additive for a mushroom cultivation medium in a liquid form is injected or sprayed to the artificial medium, and a method in which the artificial medium is immersed in the additive for a mushroom cultivation medium in a liquid form for a predetermined time. When the medium is a log, examples thereof include a method in which the log is immersed in the additive for a mushroom cultivation medium in a liquid form for a predetermined time, and a method in which the additive for a mushroom cultivation medium in a liquid form is applied or sprayed onto the log.

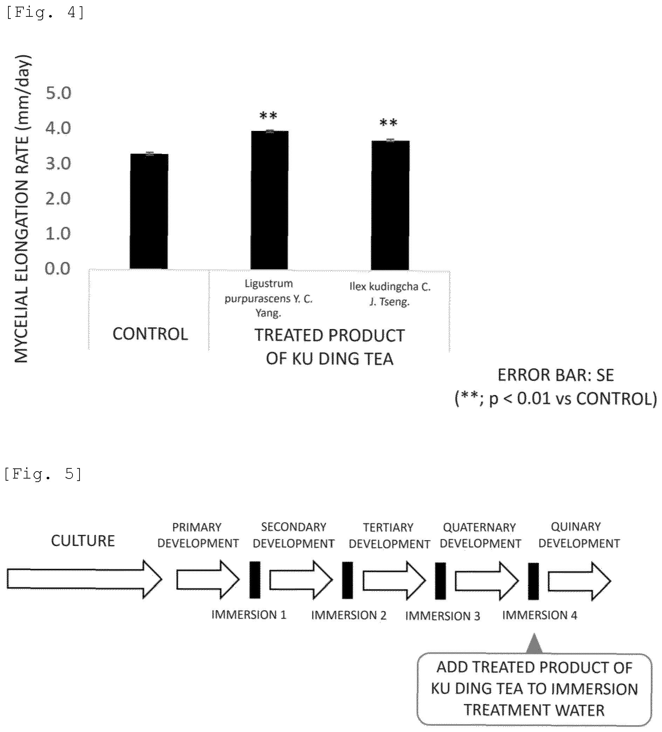

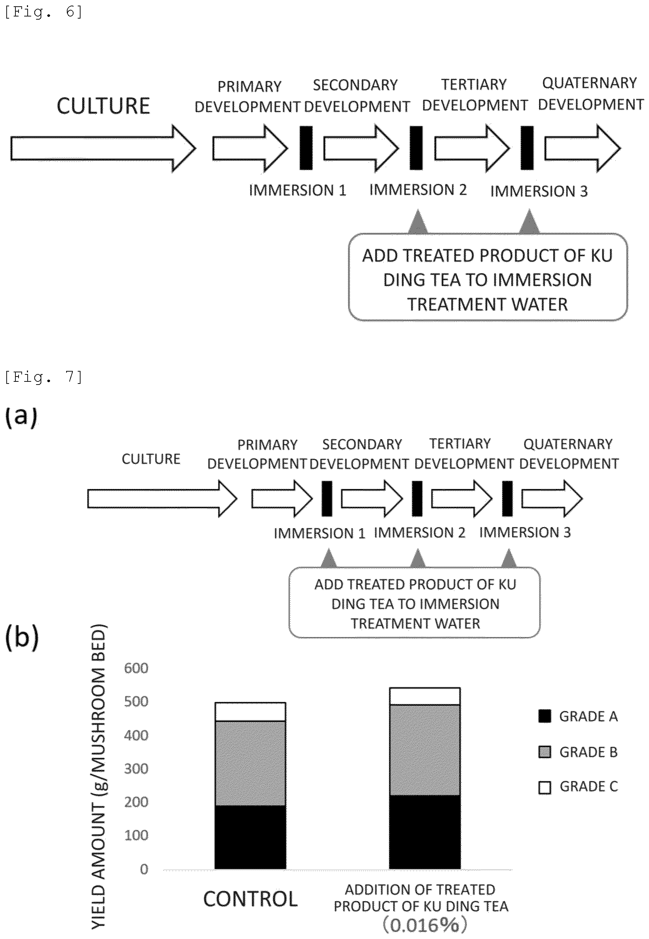

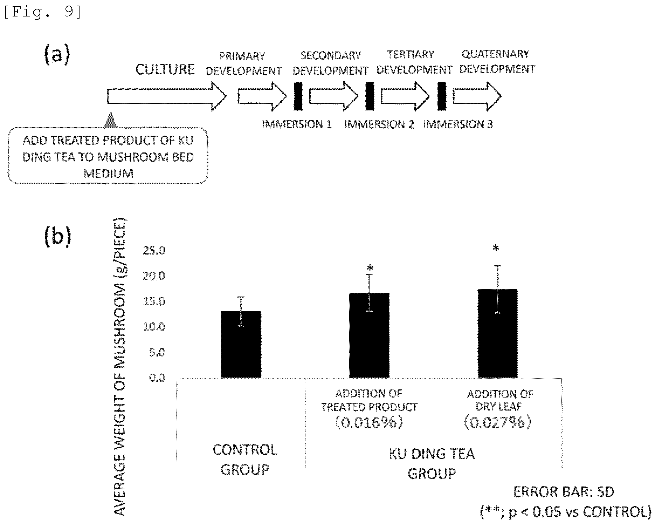

The timing and the number of times of applying the additive for a mushroom cultivation medium of the present invention to the medium for mushroom cultivation can be appropriately selected depending on the variety of mushrooms, cultivation conditions, and the like. In a case where the additive for a mushroom cultivation medium is added to and mixed with the artificial medium, for example, a method in which the additive for a mushroom cultivation medium is mixed with the medium before sterilization and fungus body inoculation (Fig. 9(a)), a method in which the additive is added once to the medium during mushroom bed cultivation, a method in which the additive is added a plurality of times to the medium before and after fungus body inoculation, and the like are exemplified, and in a case where shiitake mushrooms are cultivated by immersing the artificial medium in the additive for a mushroom cultivation medium in a liquid form for a predetermined time, for example, a method in which the additive for a mushroom cultivation medium is added to an immersion treatment liquid in the fourth immersion step (Fig. 5), a method in which the additive for a mushroom cultivation medium is added to immersion treatment liquids in the second immersion step and the third immersion step (Fig. 6), and a method in which the additive for a mushroom cultivation medium is added to all of the immersion treatment liquids in the first to third immersion steps (Fig. 7(a)) are exemplified.

The cultivation conditions (temperature and the like) under which the additive for a mushroom cultivation medium of the present invention is applied to the medium for mushroom cultivation can be appropriately selected depending on the variety of mushrooms, the application timing and the number of times of application of the additive.

For example, the additive for a mushroom cultivation medium of the present invention may be used for promoting the growth of mycelia of mushrooms. As used herein, "promotion of the growth of mycelia of mushrooms" refers to, for example, an increase in elongation rate of mycelia of mushrooms in a medium, a shortening in culture period of mycelia of mushrooms in a medium, and the like. When the additive for a mushroom cultivation medium of the present invention is used, the growth of mycelia can be stably promoted.

For example, the additive for a mushroom cultivation medium of the present invention may be used for improving the quality of fruiting bodies of mushrooms. As used herein, the "improvement in quality of fruiting bodies of mushrooms" refers to, for example, a decrease in occurrence of deformation, an increase in size of fruiting bodies (for example, in a case of shiitake mushroom, an increase in Size 2L products (diameter of 6 cm or more), an increase in Size L products (diameter of 5 cm or more and less than 6 cm), and an increase in average weight per fruiting body), an improvement in grade of mushrooms (for example, in the case of shiitake mushroom, increase in Grade A products (opening of pileus is less than 50%)), an increase in delicious taste component (for example, glutamic acid, guanylic acid, and the like) of mushrooms, an increase in functional component (for example, β-glucan, ergothioneine, eritadenine, γ-aminobutyric acid, amino acid (ornithine, arginine, aspartic acid, alanine, tyrosine, lysine, pyroglutamic acid, glutamine, citrulline, S-adenosylmethionine, hydroxyproline), nucleic acid (adenylic acid, uridylic acid), polyamine (spermidine, spermine, putrescine), and the like) of mushrooms, and the like. When the additive for a mushroom cultivation medium of the present invention is used, it is possible to stably develop a high-quality fruiting body, that is, a fruiting body having a high commercial value, regardless of the cultivation conditions (temperature or the like) of mushrooms.

The additive for a mushroom cultivation medium of the present invention may be used, for example, for increasing an amount of fruiting bodies of mushrooms developed. As used herein, the "increase in amount of fruiting bodies of mushrooms developed" refers to, for example, an increase in yield amount of fruiting bodies, shortening of the period until harvest of fruiting bodies, an increase in the number of fruiting bodies developed, and the like. When the additive for a mushroom cultivation medium of the present invention is used, it is possible to stably increase the amount of fruiting bodies developed, regardless of the cultivation conditions (temperature or the like) of mushrooms.

### (2. Medium for mushroom cultivation)

A medium for mushroom cultivation according to the present invention will be described.

The medium for mushroom cultivation of the present invention is a medium to which the above-described additive for a mushroom cultivation medium is added. Details of the mushroom, the medium for mushroom cultivation, the additive for a mushroom cultivation medium, the method of addition to the medium, and the like are the same as described above.

When the medium for mushroom cultivation of the present invention is used for mushroom cultivation, it is possible to obtain at least one of (i) an effect of promoting the growth of a mycelium of a mushroom, (ii) an effect of improving the quality of a fruiting body of a mushrooms, and (iii) an effect of increasing the amount of fruiting bodies of mushrooms developed, or (i) and (ii), (ii) and (iii), (i) and (iii), or all of the effects of (i) to (iii). Details of (i) to (iii) are the same as described above.

### (3. Method for cultivating mushroom)

A method for cultivating a mushroom according to the present invention will be described.

A first form of the method for cultivating a mushroom of the present invention includes a step of culturing a mycelium of a mushroom using the medium for mushroom cultivation described above. Details of the mushroom, the medium for mushroom cultivation, and the like are the same as described above. More specifically, for example, a desired mushroom inoculum is inoculated into the medium for mushroom cultivation of the present invention, so that a mycelium of the mushroom can be cultured. The variety of inoculum is not particularly limited, and examples thereof include the varieties of mushrooms exemplified above. As the inoculating method and the culturing method of the inoculum, a known method depending on the variety of mushroom can be adopted.

A second form of the method for cultivating a mushroom of the present invention includes a step of developing a fruiting body of a mushroom using the medium for mushroom cultivation described above. Details of the mushroom, the medium for mushroom cultivation, and the like are the same as described above. More specifically, for example, after inoculating and culturing a desired mushroom inoculum into a predetermined medium, a fruiting body of the mushroom may be developed using the medium for mushroom cultivation of the present invention, or a desired mushroom inoculum may be inoculated and cultured into the medium for mushroom cultivation of the present invention to develop a fruiting body of the mushroom. As the method for developing a fruiting body of a mushroom, a known method depending on the variety of mushroom can be adopted.

With the method for cultivating a mushroom of the present invention, it is possible to obtain at least one of (i) an effect of promoting the growth of a mycelium of a mushroom, (ii) an effect of improving the quality of a fruiting body of a mushroom, and (iii) an effect of increasing the amount of fruiting bodies of mushrooms developed, or (i) and (ii), (ii) and (iii), (i) and (iii), or all of the effects of (i) to (iii). Details of (i) to (iii) are the same as described above.

### (4. Additive for a basidiomycete culture medium, medium for a basidiomycete culture, and method for culturing basidiomycete)

The additive for a basidiomycete culture medium, the medium for a basidiomycete culture, and the method for culturing a basidiomycete according to the present invention will be described.

The additive for a basidiomycete culture medium according to the present invention contains a processed product of Ku Ding tea. In addition, the medium for a basidiomycete culture of the present invention is a medium to which the additive for a basidiomycete culture medium is added, and the method for culturing a basidiomycete of the present invention includes a step of culturing a mycelium of a basidiomycete using the medium for a basidiomycete culture. When the additive for a basidiomycete culture medium and the medium for a basidiomycete culture of the present invention are used, and by the method for culturing a basidiomycete of the present invention, the growth of a mycelium of a basidiomycete can be effectively promoted.

In the additive for a basidiomycete culture medium, the medium for a basidiomycete culture, and the method for culturing a basidiomycete according to the present invention, as the Ku Ding tea, any type of Ku Ding tea can be used without particular limitation, and for example, Ligustrum purpurascens Y. C. Yang., Ligustrum pedunculare Rehd., Ligustrum japonicum var. pubescens Koidz, Ligustrum robstum (Roxb.) Bl., Ilex cornuta Lindl. ex Paxt., Ilex kudingcha C. J. Tseng., Ilex latifolia Thunb., Cratoxylum prunifolium (Kurz) Dyer, Ehretia thyrsiflora (Sieb. et Zucc.) Nakai, Photinia serrulata Lindl, or the like can be used. For example, it is possible to suitably use Ligustrum purpurascens Y. C. Yang, Ligustrum pedunculare Rehd., Ligustrum japonicum var. pubescens Koidz, and Ligustrum robustum (Roxb.) Bl., which belong to the family Oleaceae, and Ilex kudingcha C. J. Tseng other than the family Oleaceae, and more preferably, it is possible to use Ligustrum purpurascens Y. C. Yang or Ilex kudingcha C. J. Tseng. The details of the processed product of Ku Ding tea are the same as described above.

The kind of the basidiomycete to which the additive for a basidiomycete culture medium, the medium for a basidiomycete culture, and the method for culturing a basidiomycete of the present invention are applied is not particularly limited, and is selected from the group consisting of shiitake mushroom, enokitake mushroom, Pholiota aurivella, Sarcomyxa serotina, Pleurotus pulmonarius, Ganoderma applanatum, oyster mushroom, golden oyster mushroom, pink oyster mushroom, Lepista sordida, Hypsizygus marmoreus, eryngii mushroom, Jew's Ear Fungus, butterscotch mushroom, hen-of-the-woods, common mushroom, Lyophyllum decastes, Mycoleptodonoides aitchisonii, Hypholoma sublateritium, Lion's mane mushroom, Cyclocybe aegerita, Ganoderma lucidum (Leyss. ex. Fr.) Karst, Pleurotus sajo-caju (Fr.), Trametes versicolor, Sparassis crispa, Tricholoma bakamatsutake, Agaricus subrufescens, and Inonotus obliquus.

The additive for a basidiomycete culture medium of the present invention is used, for example, by being mixed with a known liquid medium for basidiomycetes. The solid content concentration of the processed product of Ku Ding tea in the liquid medium is 0.0001 to 20 mass%, preferably 0.0005 to 15 mass%, more preferably 0.001 to 10 mass%, and even more preferably 0.002 to 5 mass% in 100 mass%.

The additive for a basidiomycete culture medium of the present invention may be used for promoting the growth of a mycelium of a basidiomycete. As used herein, "promotion of the growth of a mycelium of a basidiomycete" refers to, for example, an increase in weight of a mycelium of a basidiomycete after culture, an increase in elongation rate of a mycelium of a basidiomycete in a medium, a shortening in culture period of a mycelium of a basidiomycete, and the like. When the additive for a basidiomycete culture medium of the present invention is used, the growth of a mycelium can be stably promoted.

### (5. Conclusions)

The additive for a mushroom cultivation medium and the medium for mushroom cultivation of the present invention can improve the quality of a fruiting body of a mushroom by containing the processed product of Ku Ding tea. More specifically, reduction in occurrence of deformation of fruiting bodies of mushrooms, increase in size of a fruiting body, improvement of grade of mushrooms, increase in content of a functional component of a mushroom, and the like make it possible to harvest more fruiting bodies having a higher quality, that is, fruiting bodies having a high commercial value. With the method for cultivating a mushroom of the present invention as well, it is possible to stably harvest more fruiting bodies having a high commercial value regardless of cultivation conditions (temperature or the like) of mushrooms. The present invention can also provide the advantages of increasing a yield amount of fruiting bodies of mushrooms and promoting the growth of mycelia of mushrooms. With the increase in health consciousness, mushrooms have become a cooking ingredient preferred by consumers in recent years, and the present invention can meet the needs of such consumers.

The additive for a basidiomycete culture medium and the medium for a basidiomycete culture of the present invention can effectively promote the growth of a mycelium of a basidiomycete by containing the processed product of Ku Ding tea. With the method for culturing a basidiomycete of the present invention as well, the growth of a mycelium can be stably promoted. A mycelium of a basidiomycete may be applied to health foods, supplements, functional foods, foods for specified health use, or the like as an extract or a mycelium itself through steps such as concentration and purification, and thus the present invention can be said to contribute to the health of people from such a viewpoint. Note that the application of a mycelium of a basidiomycete according to the present invention is not limited to these, and can also be applied to those using a mycelium of a basidiomycete, such as synthetic leather.

### [Examples]

Hereinafter, the present invention will be specifically described with reference to Examples. However, the present invention is not limited to these Examples.

### (Example 1)

The elongation effect of a mycelium of a mushroom by the processed product of Ku Ding tea was verified by a culture test using an agar medium.

### (Preparation of processed product of Ku Ding tea by hot water extraction)

Water was fed to a dried Ku Ding tea leaf (Ligustrum purpurascens Y. C. Yang) (purchased from Kunming Institute of Botany, Chinese Academy of Sciences) in an amount of 5 or 15 times in terms of mass ratio, and hot water extraction was performed with it at 121°C for 20 minutes. After the extraction, the extract was filtered under reduced pressure, and the filtrate was obtained as a processed product of Ku Ding tea (extraction with water of 5-times amount: solid content concentration 6.2%, extraction with water of 15-times amount: solid content concentration 2.60) by hot water extraction. The yield calculated in accordance with the following equation was 28% in the case of extraction with water of 5-times amount and 39% in the case of extraction with water of 15-times amount. Yield (%) = (dry mass of processed product of Ku Ding tea/mass of dried tea leaf) × 100

### (Preparation of processed product of Ku Ding tea by warm water extraction)

Water was fed to a dried Ku Ding tea leaf in an amount of 15 times in terms of mass ratio, and warm water extraction was performed with it at 60°C for 60 minutes. After the extraction, the extract was filtered under reduced pressure, and the filtrate was obtained as a processed product of Ku Ding tea (solid content concentration 2.0%) by warm water extraction. The yield (calculated in the same manner as described above) was 33%.

### (Culture of mycelium)

Test strains are shown in Table 1. Note that eryngii mushroom, Cloud ear fungus, and Lion's mane mushroom are purchased from Kinokkusu Corporation, common mushroom is purchased from Nippon Norin Seed Co., Pleurotus pulmonarius, oyster mushroom, golden oyster mushroom, pink oyster mushroom, Lepista sordida, Hypsizygus marmoreus, Pholiota aurivella, Hypholoma sublateritium, Sarcomyxa serotina, Ganoderma applanatum, and enokitake mushroom are strains provided from the Forest Products Research Institute, Forest Research Department, Local Independent Administrative Agency Hokkaido Research Organization. Each strain was pre-cultured in a medium prepared using a potato dextrose agar (PDA) powder medium (manufactured by Merck) in advance.

**[Table 1]**

| General name | Scientific name | Order | Family | Genus | Name of strain |
|---|---|---|---|---|---|
| Pleurotus pulmonarius | *Pleurotus pulmonarius* | Agaricales | Pleurotaceae | Pleurotus | Pp07-1 |
| Oyster mushroom | *Pleurotus ostreatus* | Agaricales | Pleurotaceae | Pleurotus | Po04-5 |
| Golden oyster mushroom | *Pleurotus citrinopileatus* | Agaricales | Pleurotaceae | Pleurotus | Pc94-3 |
| Pink oyster mushroom | *Pleurotus djamor var. roseus* | Agaricales | Pleurotaceae | Pleurotus | Psm07-10 |
| Eryngii mushroom | *Pleurotus eryngii* | Agaricales | Pleurotaceae | Pleurotus | EG-109 |
| Common mushroom | *Agaricus bisporus* | Agaricales | Agaricaceae | Agaricus | Brown |
| Lepista sordida | *Lepista sordida* | Agaricales | Tricholomataceae | Lepista | Ls98-8 |
| Shiitake mushroom | *Lentinula edodes* | Agaricales | Tricholomataceae | Lentinula | - |
| Hypsizygus marmoreus | *Hypsizygus marmoreus* | Agaricales | Lyophyllaceae | Hypsizygus | Hm05-3 |
| Pholiota aurivella | *Pholiota aurivella* | Agaricales | Strophariaceae | Pholiota | Pa97-6 |
| Hypholoma sublateritium | *Hypholoma sublateritium* | Agaricales | Strophariaceae | Hypholoma | Hs92-22 |
| Sarcomyxa serotina | *Sarcomyxa serotina* | Agaricales | Typhulaceae | S. serotina | Ps85-3 |
| Ganoderma applanatum | *Ganoderma applanatum* | Agaricales | Ganodermataceae | Ganoderma | Ga84-13 |
| Enokitake mushroom | *Flammulina velutipes* | Agaricales | Physalacriaceae | Flammulina | Fv12-1 |
| Cloud ear fungus | *Auricularia auricula-judae* | Auriculariales | Auricularaceae | Auricularia | AK12 |
| Lion's mane mushroom | *Hericium erinaceus* | Russulales | Hericiaceae | Hericium | - |

### (Preparation of test medium)

A test was conducted using each of the processed product of Ku Ding tea by hot water extraction or the processed product of Ku Ding tea by warm water extraction. The processed product of Ku Ding tea shown in Table 2 was added to 3.9 g of a PDA powder medium, and was diluted with water so as to be 100 mL in total, thereby preparing each medium in such a manner that the solid content concentration of the processed product of Ku Ding tea was 0.08%, 0.11%, or 0.31%. Note that a PDA medium to which no processed product of Ku Ding tea was added was used as a control. These media were sterilized with high-pressure steam at 121°C for 15 minutes and aseptically dispensed into a sterilized petri dish having a diameter of 87.3 mm × a height of 14 mm to prepare a plate, thereby obtaining a test medium.

The pre-cultured medium was punched out with a 4-mm diameter cork borer, inoculated in the center of the test medium, and cultured in a dark place at 25°C. During the culture, the colony radius was measured over time using image analysis software: imageJ 1.51K (http://imageJ.nih.gov/ij/, provider: National Institutes of Health (NIH)). More specifically, the colony radius was measured at three points: (i) at the time of inoculation, (ii) at the time when the colony radius reached about 50% of the Petri dish radius, and (iii) at the time when the colony radius reached about 80% of the Petri dish radius, and plotted on a graph with the horizontal axis representing the number of days of culture (day) and the vertical axis representing the colony radius (mm), and the slope of the graph was defined as "mycelial elongation rate" (mm/day) (the elongation amount of a mycelium per day) .

The test conditions and results are shown in Table 2. In Table 2, the numerical value (%) in the rightmost column is the mycelial elongation rate ratio by addition of the processed product of Ku Ding tea (the processed product of Ku Ding tea by hot water extraction or the processed product of Ku Ding tea by warm water extraction) to the control without addition. In each strain of mushrooms, the mycelial elongation rate was increased by the addition of the processed product of Ku Ding tea as compared with the control without addition. This has been shown that the processed product of Ku Ding tea of the present Example promotes the growth of a mycelium of a mushroom.

**[Table 2]**

| (*; p < 0.05, **; P < 0.01 vs control) | | | | | | |
|---|---|---|---|---|---|---|
| Strain | Processed product of Ku Ding tea | | Test medium | Culture | Mycelial elongation rate ratio (vs Control) | |
| General name | Extraction method | Amount of fed water | Solid content concentration | Days of culture | | |
| Pleurotus pulmonarius | Hot water extraction | 5-times amount | 0.11% | 5 days | ** | 171% |
| Oyster mushroom | Warm water extraction | 5-times amount | 0.11% | 6 days | ** | 173% |
| Golden oyster mushroom | Hot water extraction | 5-times amount | 0.11% | 4 days | * | 129% |
| Pink oyster mushroom | Hot water extraction | 5-times amount | 0.11% | 4 days | ** | 116% |
| Eryngii mushroom | Warm water extraction | 15-times amount | 0.08% | 8 days | * | 113% |
| Common mushroom | Warm water extraction | 15-times amount | 0.08% | 14 days | P = 0.099 | 169% |
| Lepista sordida | Hot water extraction | 5-times amount | 0.11% | 10 days | * | 109% |
| Shiitake mushroom | Hot water extraction | 5-times amount | 0.11% | 10 days | ** | 117% |
| Hypsizygus marmoreus | Warm water extraction | 15-times amount | 0.08% | 11 days | ** | 118% |
| Pholiota aurivella | Hot water extraction | 5-times amount | 0.11% | 12 days | ** | 187% |
| Hypholoma sublateritium | Warm water extraction | 15-times amount | 0.08% | 18 days | * | 107% |
| Sarcomyxa serotina | Hot water extraction | 5-times amount | 0.11% | 10 days | ** | 180% |
| Ganoderma applanatum | Hot water extraction | 5-times amount | 0.11% | 10 days | ** | 167% |
| Enokitake mushroom | Warm water extraction | 15-times amount | 0.08% | 7 days | * | 121% |
| Cloud ear fungus | Warm water extraction | 15-times amount | 0.08% | 7 days | ** | 128% |
| Lion's mane mushroom | Warm water extraction | 15-times amount | 0.31% | 11 days | ** | 244% |

### (Example 2)

The elongation effect of a mycelium of a mushroom by the processed product of Ku Ding tea having different extraction conditions was verified by a culture test using an agar medium.

### (Preparation of processed product of Ku Ding tea by hot water extraction)

Water was fed to a dried Ku Ding tea leaf as in Example 1 in an amount of 15 times in terms of mass ratio, and hot water extraction was performed with it at 121°C for 20 minutes. After the extraction, the extract was filtered under reduced pressure, and the filtrate was obtained as a processed product of Ku Ding tea by hot water extraction.

### (Preparation of processed product of Ku Ding tea by warm water extraction)

Water was fed to a dried Ku Ding tea leaf as in Example 1 in an amount of 15 times in terms of mass ratio, and warm water extraction was performed with it at 60°C for 60 minutes. After the extraction, the extract was filtered under reduced pressure, and the filtrate was obtained as a processed product of Ku Ding tea by warm water extraction.

### (Culture of mycelium)

As test strains, golden oyster mushroom (Pc94-3) and Pholiota aurivella (Pa97-6) were used (provided from the Forest Products Research Institute, Forest Research Department, Local Independent Administrative Agency Hokkaido Research Organization). Each strain was pre-cultured in a medium prepared using a potato dextrose agar (PDA) powder medium (manufactured by Merck) in advance.

### (Preparation of test medium)

The processed product of Ku Ding tea by hot water extraction was added to 3.9 g of a PDA powder medium, and was diluted with water so as to be 100 mL in total, thereby preparing each medium in such a manner that the solid content concentration of the processed product of Ku Ding tea by hot water extraction was 0.001%, 0.005%, 0.019%, 0.078%, or 0.311%. The processed product of Ku Ding tea by warm water extraction was added to 3.9 g of a PDA powder, and was diluted with water so as to be 100 mL in total, thereby preparing each medium in such a manner that the solid content concentration of the processed product of Ku Ding tea by warm water extraction was 0.001%, 0.005%, 0.019%, 0.078%, or 0.311%. Note that a medium to which no processed product of Ku Ding tea was added was used as a control. These media were sterilized with high-pressure steam at 121°C for 15 minutes and aseptically dispensed into a sterilized petri dish having a diameter of 87.3 mm × a height of 14 mm to prepare a plate, thereby obtaining a test medium.

Inoculation and culture were performed in the same manner as in Example 1, and the "mycelial elongation rate" (mm/day) (the amount of a mycelium elongated per day) was measured.

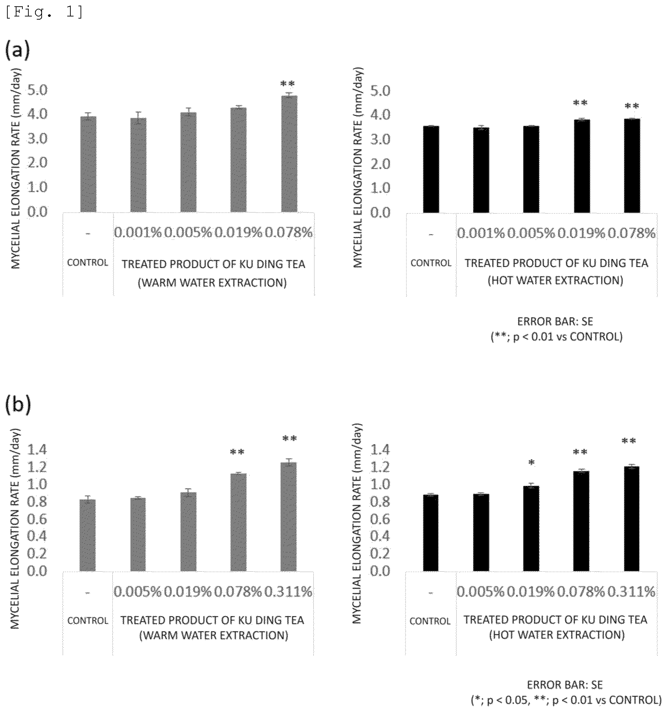

The results are shown in Figs. 1(a) to 1(b). In each strain of golden oyster mushroom (Fig. 1(a)) and Pholiota aurivella (Fig. 1(b)), the mycelial elongation rate was increased by the addition of the processed product of Ku Ding tea as compared with the control without addition. In addition, the mycelial elongation rate was increased by both of the processed product of Ku Ding tea by hot water extraction (121°C, 20 min) and the processed product of Ku Ding tea by warm water extraction (60°C, 60 min) as compared with the control without addition. This has been shown that the processed product of Ku Ding tea of the present Example promotes the growth of mushroom mycelia in both the extraction conditions.

### (Example 3)

The growth promoting effect of mycelia of shiitake mushroom and hen-of-the-woods by the processed product of Ku Ding tea was verified by a liquid culture test.

### (Preparation of processed product of Ku Ding tea)

Water was fed to a dried Ku Ding tea leaf as in Example 1 in an amount of 15 times in terms of mass ratio, and warm water extraction was performed with it at 60°C for 60 minutes. After the extraction, the extract was filtered under reduced pressure, and the filtrate was obtained as a processed product of Ku Ding tea by warm water extraction.

### (Pre-culture of mycelium)

As a test strain, shiitake mushroom (Mori XR-1) or hen-of-the-woods (Mori 52) were used. Each strain was pre-cultured in the same manner as in Example 1 in advance.

### (Preparation of test medium)

The processed product of Ku Ding tea was added to 20 g of Malt Extract (manufactured by Muntons), 2 g of Yeast Extract Dried (manufactured by NACALAI TESQUE, INC.), and 20 g of D-Glucose (manufactured by FUJIFILM Wako Pure Chemical Corporation), and the mixture was diluted with water so as to be 1 L in total, thereby preparing each medium for shiitake mushroom having a solid concentration of the processed product of Ku Ding tea of 0.008% or 0.016%. In addition, the processed product of Ku Ding tea was added to 30 g of D-Glucose (manufactured by FUJIFILM Wako Pure Chemical Corporation), 6 g of Yeast Extract Dried (manufactured by NACALAI TESQUE, INC.), 2 g of Polypeptone (manufactured by Nippon Becton Dickinson Company, Ltd.), 0.5 g of MgSO₄·7H₂O (manufactured by FUJIFILM Wako Pure Chemical Corporation), 0.5 g of K₂HPO₄ (manufactured by FUJIFILM Wako Pure Chemical Corporation), and 0.2 g of MnSO₄·5H₂O (manufactured by FUJIFILM Wako Pure Chemical Corporation), and the mixture was diluted with water so as to be 1 L in total, thereby preparing each medium for hen-of-the-woods having a solid content concentration of the processed product of Ku Ding tea of 0.004% or 0.008%. Note that each medium to which no processed product of Ku Ding tea was added was used as a control. These media were dispensed in 250 mL portions into a 500-mL shake flask and sterilized with high-pressure steam at 121°C for 15 minutes to obtain test media.

### (Liquid culture of mycelium)

Five pieces of the pre-cultured medium punched out with a cork borer having a diameter of 4 mm were put into a liquid medium per flask to perform inoculation, and reciprocating shaking culture was performed with it at 25°C at 145 times/min. The culture period was 11 days for shiitake mushroom and 31 days for hen-of-the-woods.

### (Collection and weight measurement of mycelium)

After the culture, the flask was sterilized with high-pressure steam at 121°C for 20 minutes. In the case of shiitake mushroom, the liquid medium was filtered under reduced pressure to collect a mycelium, and in the case of hen-of-the-woods, the liquid medium was centrifuged at 15300 ×g to collect a mycelium. The collected mycelia were freeze-dried and then weighed.

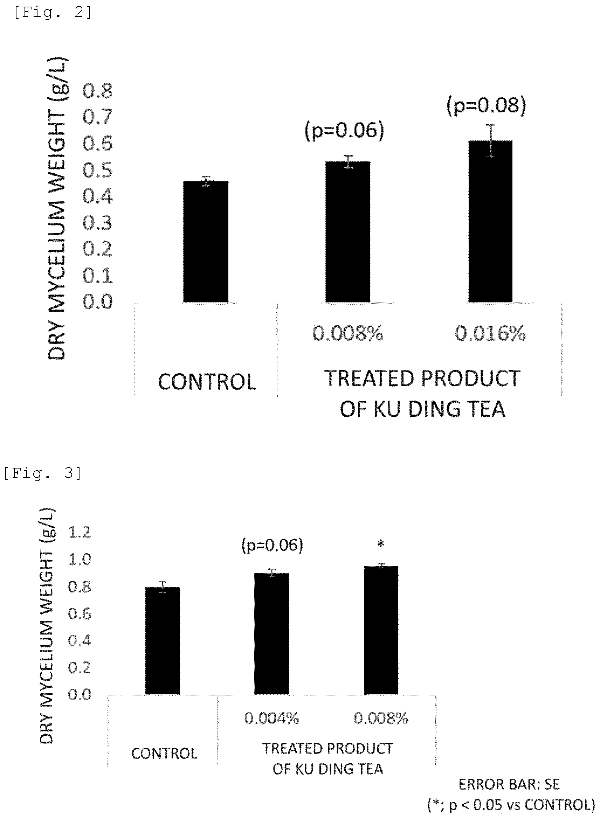

The results are shown in Figs. 2 and 3. With the addition of the processed product of Ku Ding tea, the dry mycelial weights of both shiitake mushroom (Fig. 2) and hen-of-the-woods (Fig. 3) increased depending on the solid content concentration of the processed product of Ku Ding tea as compared with the control without addition. This has been shown that the processed product of Ku Ding tea of the present Example promotes the growth of mycelia of shiitake mushroom and hen-of-the-woods.

### (Example 4)

The elongation effect of a mycelium of a mushroom by the processed product of Ku Ding tea with different types of Ku Ding tea was verified by a culture test using an agar medium.

### (Preparation of processed product of Ku Ding tea with Ligustrum purpurascens Y. C. Yang.)

Water was fed to a dried Ku Ding tea leaf as in Example 1 in an amount of 15 times in terms of mass ratio, and warm water extraction was performed with it at 60°C for 60 minutes. After the extraction, the extract was filtered under reduced pressure, and the filtrate was obtained as a processed product of Ku Ding tea with Ligustrum purpurascens Y. C. Yang.

### (Preparation of processed product of Ku Ding tea with Ilex kudingcha C. J. Tseng.)

Water was fed in an amount of 15 times relative to Ilex kudingcha C. J. Tseng (purchased from Shingy Co., Ltd.), and warm water extraction was performed with it at 60°C for 60 minutes. After the extraction, the extract was filtered under reduced pressure, and the filtrate was obtained as a processed product with Ku Ding tea of Ilex kudingcha C. J. Tseng.

### (Culture of mycelium)

As a test strain, Cloud ear fungus was used (purchased from Kinokkusu Corporation). The strain was pre-cultured in a medium prepared using a potato dextrose agar (PDA) powder medium (manufactured by Merck) in advance.

### (Preparation of test medium)

Each processed product of Ku Ding tea was added to 3.9 g of a PDA powder, and was diluted with water so as to be 100 mL in total, thereby preparing each medium in such a manner that the solid content concentration of the processed product of Ku Ding tea was 0.078%. Note that a medium to which no processed product of Ku Ding tea was added was used as a control. These media were sterilized with high-pressure steam at 121°C for 15 minutes and aseptically dispensed into a sterilized petri dish having a diameter of 87.3 mm × a height of 14 mm to prepare a plate, thereby obtaining a test medium.

Inoculation and culture were performed in the same manner as in Example 1, and the "mycelial elongation rate" (mm/day) (the amount of a mycelium elongated per day) was measured.

The results are shown in Fig. 4. The mycelial elongation rate was significantly increased by both of the processed product of Ku Ding tea with Ligustrum purpurascens Y. C. Yang. and the processed product of Ku Ding tea with Ilex kudingcha C. J. Tseng. as compared with the control without addition. This has been shown that the processed product of Ku Ding tea of the present Example promotes the growth of a mycelium of Cloud ear fungus with both the types of Ku Ding tea.

### (Example 5)

The influence of the processed product of Ku Ding tea on the development of a fruiting body of shiitake mushroom was verified by a mushroom bed cultivation test (the processed product of Ku Ding tea was added to immersion treatment water in the fourth immersion step).

### (Preparation of processed product of Ku Ding tea by warm water extraction)

Water was fed to a dried Ku Ding tea leaf in an amount of 15 times in terms of mass ratio, and warm water extraction was performed with it at 60°C for 60 minutes. After the extraction, the extract was filtered under reduced pressure, and the filtrate was obtained as a processed product of Ku Ding tea (solid content concentration 2.0%) by warm water extraction. The yield (calculated as in Example 1) was 33%.

### (Preparation of Ku Ding tea processed product-added water)

The processed product of Ku Ding tea was added to tap water so as to have a solid content concentration of 0.016%, thereby obtaining Ku Ding tea processed product-added water. Note that tap water to which no processed product of Ku Ding tea was added was used as a control.

### (Immersion treatment and mushroom bed cultivation)

(1) 55 wt.% of raw sawdust (oak : white birch = 7 : 3), 10 wt.% of nutrient additive (Derutoppu, manufactured by Mori & Company, Ltd.) and 35 wt.% of water were put in a mixer and stirred to form a uniform mixture. Each 1.3 kg of this mixture was filled in a polypropylene cultivation bag (1.3 kg mushroom bed cultivation bag, manufactured by Mori & Company, Ltd.), and sterilized under high pressure at 115°C for 60 minutes to prepare a medium for mushroom cultivation.
(2) About 9 g of inoculum of shiitake mushroom (Mori XR1) was inoculated into the cooled medium for mushroom cultivation, and cultured at a temperature of 23°C or lower under bright conditions for 80 to 90 days to obtain a mushroom bed. After completion of the culture, the bag was removed, and the mushroom bed was moved to a growing house at 25°C in the daytime and 12°C at night and having a humidity of about 80% to perform entire cultivation (development step). The developed fruiting bodies were harvested when the diameter of the pileus reached 4 cm or more. After the development of harvestable fruiting bodies was almost completed (after completion of the primary development), the mushroom bed was immersed in water for 24 hours (immersion treatment), and then the development operation was performed to perform secondary development. Within about 100 days from the start of the primary development step, the same operation was carried out until quaternary development.
(3) After completion of the quaternary development, immersion treatment was performed using the Ku Ding tea processed product-added water obtained as described above. Thereafter, cultivation was performed in a glass greenhouse at 5 to 15°C and a humidity of 60 to 100% for 18 days, and fruiting bodies in which the diameter of the pileus reached 4 cm or more, in which the pileus was opened for 60 to 80% and reached a state around partial veil breaking were harvested. Partial veil breaking refers to a state in which the "gill" on the back side of the pileus starts to be seen in the process of opening the pileus of the fruiting body. Note that as a control, in the fourth immersion treatment, tap water to which no Ku Ding tea processed product-added water was added was used, and then the development step was performed in the same manner. An outline of the steps of culture, development, and immersion is illustrated in Fig. 5.

### (Investigation of yield amount of fruiting bodies)

The harvested fruiting bodies of the quinary development were classified depending on the size differences indicated below and the weight of each classified group was measured.
<Classification of size>
Size S (less than 4 cm in diameter)
Size M (4 cm or more and less than 5 cm in diameter)
Size L (5 cm or more and less than 6 cm in diameter)
Size 2L (6 cm or more in diameter)

In addition, classification was also performed by combining the above size and the quality shown below, and the weight of each classified group was measured. For example, "Grade SA" in Table 3 represents a fruiting body having a size of "Size S (less than 4 cm in diameter)" and a quality of "Grade A (less than 50% in opening of pileus)".

### <Classification of quality>

Grade A (less than 50% in opening of pileus)
Grade B (50% or more and less than 80% in opening of pileus)
Others (80% or more or deformation)

The investigation results of the yield amount of the fruiting bodies in the quinary development are shown in Table 3 as the total value of nine mushroom beds. The yield amount of the fruiting bodies increased (129%) by the immersion treatment using the Ku Ding tea processed product-added water (Ku Ding tea group in Table 3) as compared with the control group to which no processed product of Ku Ding tea was added. In addition, in the Ku Ding tea group, regarding Grade A products, no Grade SA product having a small size and having a low commercial value was harvested, whereas the amount of Grade MA product having a large size and having a high commercial value increased (108%), and the amount of Grade LA product having a larger size and having a further high commercial value remarkably increased (248%). A similar tendency was observed for Grade B products, and the amount of Grade LB product having a large size increased (129%), and no Grade 2LB product having a larger size was harvested in the control group, but 100 g of it was harvested in the Ku Ding tea group. Focusing on size, the amount of Size L product increased to 171%, the larger Size 2L product was not harvested in the control group while 100 g of it was harvested in the Ku Ding tea group, and thus the yield amount of large-sized fruiting bodies having a higher commercial value increased by the immersion treatment using the Ku Ding tea processed product-added water. This has been shown that the processed product of Ku Ding tea of the present Example improves the quality of a fruiting body of shiitake mushroom and increases the amount of fruiting bodies developed.

**[Table 3]**

| | Control group (g) | Ku Ding tea group (g) | Increase amount (g) | Relative value (control = 100%) |
|---|---|---|---|---|
| Grade SA | 17 | 0 | -17 | 0% |
| Grade MA | 178 | 193 | 15 | 108% |
| Grade LA | 21 | 52 | 31 | 248% |
| Grade 2LA | 0 | 0 | 0 | - |
| Grade SB | 9 | 6 | -3 | 67% |
| Grade MB | 44 | 0 | -44 | 0% |
| Grade LB | 38 | 49 | 11 | 129% |
| Grade 2LB | 0 | 100 | 100 | - |
| Total of Size S | 26 | 6 | -20 | 23% |
| Total of Size M | 240 | 212 | -28 | 88% |
| Total of Size L | 59 | 101 | 42 | 171% |
| Total of Size 2L | 0 | 100 | 100 | - |
| Total of all | 325 | 419 | 94 | 129% |

### (Example 6)

The influence of the processed product of Ku Ding tea on the development of fruiting bodies of shiitake mushroom was verified by a mushroom bed cultivation test (the processed product of Ku Ding tea was added in the second and third immersion steps).

### (Preparation of processed product of Ku Ding tea by warm water extraction)

A processed product of Ku Ding tea by warm water extraction was prepared in the same manner as in Example 5.

### (Preparation of Ku Ding tea processed product-added water)

In the same manner as in Example 5, Ku Ding tea processed product-added water was prepared.

### (Immersion treatment and mushroom bed cultivation)

The same operations as in (1) and (2) of Example 5 were carried out to cultivate shiitake mushroom. At the time, the Ku Ding tea processed product-added water obtained as described above was used in the second and third immersion treatments. Note that as a control, in the second and third immersion treatments, tap water to which no Ku Ding tea processed product-added water was added was used, and then the development step was performed in the same manner. An outline of the steps of culture, development, and immersion is illustrated in Fig. 6.

### (Investigation of yield amount of fruiting bodies)

In the same manner as in Example 5, the yield amount of fruiting bodies of the tertiary development and the quaternary development was investigated.

### (Component analysis of fruiting body)

Component analysis on ornithine and β-glucan was performed on the harvested dry fruiting body powder of shiitake mushroom of the tertiary development and the quaternary development. The analysis on ornithine was performed using an amino acid automatic analyzer at Research Institute of Biomolecule Metrology Co., Ltd., and the analysis on β-glucan was performed by an enzyme method at Japan Food Research Laboratories.

The measurement results of yield amounts of fruiting bodies of 90 mushroom beds are shown in Table 4. The yield amount of fruiting bodies is the sum of yield amounts of the tertiary development and the quaternary development. By the immersion treatment using the Ku Ding tea processed product-added water (Ku Ding tea group in Table 4), regarding Grade A, the amount of Grade LA product having a large size and having a high commercial value increased

(106%) and the amount of Grade 2LA product having a larger size and having a higher commercial value remarkably increased (793%). A similar tendency was observed for Grade B products, the amount of Grade LB products having a large size increased (141%), and the amount of Grade 2LB products having a larger size also increased (130%). Focusing on size, the each amount of Size S product and Size M products decreased, the amount of Size L product increased to 113%, and the amount of Size 2L product increased to 210%. Thus, the immersion treatment using the Ku Ding tea processed product-added water increased the yield amount of fruiting bodies having a higher commercial value and having a large size.

**[Table 4]**

| | Control group (g) | Ku Ding tea group (g) | Increase amount (g) | Relative value (control = 100%) |
|---|---|---|---|---|
| Grade SA | 1440 | 843 | -597 | 59% |
| Grade MA | 6102 | 6081 | -21 | 100% |
| Grade LA | 3694 | 3921 | 227 | 106% |
| Grade 2LA | 40 | 317 | 277 | 793% |
| Grade SB | 145 | | -29 | 80% |
| Grade MB | 1476 | 1297 | -197 | 87% |
| Grade LB | 1116 | 1568 | 452 | 141% |
| Grade 2LB | 293 | 381 | 88 | 130% |
| Total of Size S | 1593 | 961 | -632 | 60% |
| Total of Size M | 7614 | 7393 | -221 | 97% |
| Total of Size L | 4919 | 5555 | 636 | 113% |
| Total of Size 2L | 333 | 698 | 365 | 210% |
| Total of all | 14459 | 14607 | 148 | 101% |

In addition, the component analysis results in 100 g of fruiting body dry powder of the tertiary development and the quaternary development are shown in Table 5. By the immersion treatment using the Ku Ding tea processed product-added water (Ku Ding tea group in Table 5), the content of ornithine increased (109%), and the content of β-glucan also increased (104%). The immersion treatment using the Ku Ding tea processed product-added water increased the contents of ornithine and β-glucan, which are functional components of mushrooms.

**[Table 5]**

| | Control group | Ku Ding tea group | Increase amount | Relative value (control = 100%) |
|---|---|---|---|---|
| Ornithine (mg/100 g) | 340 | 370 | 30 | 109% |
| β-glucan (g/100 g) | 20.6 | 21.5 | 0.9 | 104% |

These have been shown that the processed product of Ku Ding tea of the present Example improves the quality of a fruiting body of shiitake mushroom.

### (Example 7)

The influence of the processed product of Ku Ding tea on the development of a fruiting body of shiitake mushroom was verified by a mushroom bed cultivation test (the processed product of Ku Ding tea was added to immersion treatment water in the first to third immersion steps).

### (Preparation of processed product of Ku Ding tea)

Water was fed to a dried Ku Ding tea leaf in an amount of 15 times in terms of mass ratio, and warm water extraction was performed with it at 60°C for 60 minutes. After the extraction, the extract was filtered under reduced pressure, and the filtrate was obtained as a processed product of Ku Ding tea.

### (Preparation of Ku Ding tea processed product-added water)

The processed product of Ku Ding tea was added to tap water so as to have a solid content concentration of 0.016%, thereby obtaining Ku Ding tea processed product-added water. Note that tap water to which no processed product of Ku Ding tea was added was used as a control.

### (Immersion treatment and mushroom bed cultivation)

The same operations as in (1) and (2) of Example 5 were carried out to cultivate shiitake mushroom. At the time, the Ku Ding tea processed product-added water obtained as described above was used in all the first to third immersion treatments. Note that as a control, in the second and third immersion treatments, tap water to which no Ku Ding tea processed product-added water was added was used, and then the development step was performed in the same manner. An outline of the steps of culture, development, and immersion is illustrated in Fig. 7(a). 55 wt.% of raw sawdust (oak : white birch = 7 : 3), 10 wt.% of nutrient additive (Derutoppu, manufactured by Mori & Company, Ltd.), and 35 wt.% of water were put in a mixer and stirred, and each 1.3 kg of the mixture was filled in a polyethylene cultivation bag (1.3 kg mushroom bed cultivation bag, manufactured by Mori & Company, Ltd.), and sterilized with high-pressure steam. About 9 g of inoculum of shiitake mushroom (Mori XR1, Mori & Company, Ltd.) was inoculated into the cooled medium, and cultured under bright conditions for 80 to 90 days. After completion of the culture, the bag was removed, fruiting bodies were developed, and fruiting bodies of the primary development were harvested for 16 to 20 days. After harvesting, the mushroom bed was immersed in water (immersion treatment) for 24 hours, and then cultivation was performed with it in a growing house at 5 to 15°C and a humidity of 60 to 100% for 16 to 22 days, and fruiting bodies having a pileus diameter of 4 cm or more were harvested. This immersion treatment and development steps were repeated three times, and in all of the three immersion steps, the Ku Ding tea processed product-added water obtained as described above was used, and then the development step was performed in the same manner. Note that as a control, tap water to which no Ku Ding tea processed product-added water was added was used, and the development step was performed in the same manner.

### (Investigation of yield amount of fruiting bodies)

The harvested fruiting bodies were classified as follows depending on the degree of opening of the pileus, and the yield amount (g/mushroom bed) of each group was measured.
Grade A: less than 50% in opening of pileus
Grade B: 50% or more and less than 80% in opening of pileus
Grade C: 80% or more in opening of pileus or deformation

The results are shown in Fig. 7(b). The yield amount of fruiting bodies increased (109%) by the immersion treatment using the Ku Ding tea processed product-added water as compared with the control group to which no processed product of Ku Ding tea was added. Regarding Grade A to C, the yield amount of the Grade A product having a high commercial value particularly increased, and the yield amount was 122% of the control.

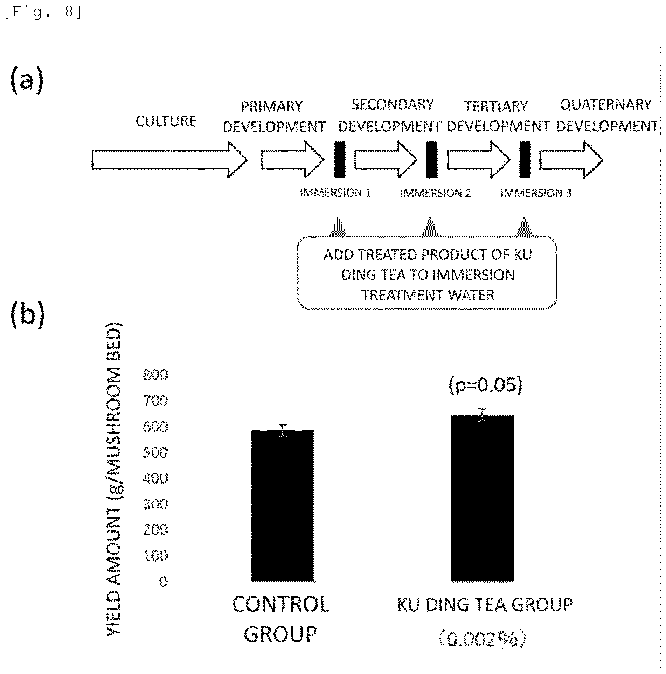

In addition, the yield amount was investigated by conducting the test in the same manner as described above, except that the composition of the medium was changed to 30 wt.% of dry sawdust (oak : white birch = 7 : 3), 10 wt.% of a nutrient additive (Derutoppu, manufactured by Mori & Company, Ltd.), and 60 wt.% of water, the solid content concentration of the processed product of Ku Ding tea in the Ku Ding tea processed product-added water was changed to 0.002%, each cultivation period was changed to 22 to 28 days, and the harvest standard was changed to a state around the partial veil breaking when the pileus was opened for about 50%. An outline of the steps of culture, development, and immersion is illustrated in Fig. 8(a).

The results are shown in Fig. 8(b). The total weight of harvested fruiting bodies of the Grade A product or the Grade B product, which had a high quality, increased (110%) by the immersion treatment using the Ku Ding tea processed product-added water as compared with the control group to which no processed product of Ku Ding tea was added.

From these, it has been shown that the processed product of Ku Ding tea of the present Example improves the quality of shiitake mushroom and increases the amount of fruiting bodies developed.

### (Example 8)

The influence of the processed product of Ku Ding tea having different forms on the development of a fruiting body of shiitake mushroom was verified by a mushroom bed cultivation test.

### (Preparation of processed product of Ku Ding tea by warm water extraction)

Water was fed to a dried Ku Ding tea leaf in an amount of 15 times in terms of mass ratio, and hot water extraction was performed with it at 60°C for 60 minutes. After the extraction, the extract was filtered under reduced pressure, and the filtrate was obtained as a processed product of Ku Ding tea by warm water extraction.

### (Processed product of Ku Ding tea as tea leaf)

A dried Ku Ding tea leaf (Ligustrum purpurascens Y. C. Yang) (purchased from Kunming Institute of Botany, Chinese Academy of Sciences) was used as the processed product of Ku Ding tea as it was.

### (Preparation of Ku Ding tea processed product-mixed medium)

The processed product of Ku Ding tea by warm water extraction was added to the medium so as to have a solid content concentration of 0.016% with respect to the weight of the medium, thereby obtaining a medium mixed with the processed product of Ku Ding tea by warm water extraction. Further, the processed product of Ku Ding tea as tea leaves was added to the medium so as to have a solid content concentration of 0.027% with respect to the medium, thereby obtaining a medium mixed with the processed product of Ku Ding tea as tea leaves. Note that a medium to which no processed product of Ku Ding tea was added was used as a control.

### (Immersion treatment and mushroom bed cultivation)

(1) 30 wt.% of dry sawdust (oak : white birch = 7 : 3), 10 wt.% of nutrient additive (Derutoppu, manufactured by Mori & Company, Ltd.), and 60 wt.% of water were put in a mixer and stirred to make a uniform state. Each 1.3 kg of the mixture was filled in a polypropylene cultivation bag (1.3 kg mushroom bed cultivation bag, manufactured by Mori & Company, Ltd.), and sterilized under high pressure at 115°C for 60 minutes to prepare a medium for mushroom cultivation.
(2) About 9 g of inoculum of shiitake mushroom (Mori XR1) was inoculated into the cooled medium of (1), and cultured at 22°C under dark conditions for 80 to 90 days. After the completion of the culture, the mushroom bed removed from the bag was moved to a cultivation room at 16°C and a humidity of about 85% to perform entire cultivation. Thereafter, the same operation as in Example 5 was performed to cultivate shiitake mushroom. An outline of the steps of culture, development, and immersion is illustrated in Fig. 9(a). A yield amount was investigated in the same manner as in Example 7 except that shiitake mushrooms in which the pileus was opened for about 50% and became into a state around partial veil breaking were harvested.

The results are shown in Fig. 9(b). In both of the medium mixed with the processed product of Ku Ding tea by warm water extraction ("processed product added" in Fig. 9(b)) and the medium mixed with the processed product of Ku Ding tea as tea leaves ("dried leaves added" in Fig. 9(b)), the average weight per one fruiting body was significantly increased as compared with the control to which no processed product of Ku Ding tea was added, and it was shown that the fruiting body was increased in size. This has been shown that the amount of high-quality fruiting bodies developed is increased due to an increase in size of shiitake mushroom when either one obtained by warm water extraction or one obtained by using tea leaves as they are is used as the processed product of Ku Ding tea of the present Example.

### (Example 9)

The influence of the processed product of Ku Ding tea on the development of a fruiting body of hen-of-the-woods was verified by a mushroom bed cultivation test.

### (Preparation of processed product of Ku Ding tea)

Water was fed to a dried Ku Ding tea leaf in an amount of 15 times in terms of mass ratio, and extraction was performed with it at 60°C for 60 minutes. After the extraction, the extract was filtered under reduced pressure, and the filtrate was obtained as a processed product of Ku Ding tea.

### (Preparation of Ku Ding tea processed product-mixed medium)

Raw sawdust (white birch), wheat bran, and soybean dreg were put into a mixer so as to have a weight ratio of 576 : 40 : 9, and tap water was added to adjust the water content to about 60%. Furthermore, the processed product of Ku Ding tea was added thereto so as to have a solid content concentration of 0.005%, and then stirred to be in a uniform state. Each 2.6 kg of the mixture was filled in a polypropylene cultivation bag (2.5 kg mushroom bed cultivation bag, manufactured by F. Tec. Co., Ltd.), and sterilized under high pressure at 115°C for 60 minutes to prepare a Ku Ding tea processed product-mixed medium. Note that a medium to which no processed product of Ku Ding tea was mixed was used as a control.

### (Mushroom bed cultivation)

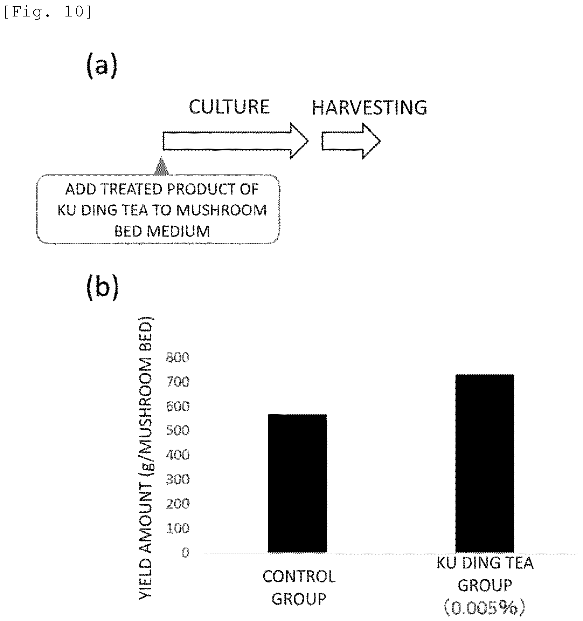

About 10 to 13 g of inoculum of hen-of-the-woods (Mori 52) was inoculated per mushroom bed into the cooled medium, and cultured at 22 to 24°C and a humidity of 70% under dark conditions for 37 to 40 days. Thereafter, for 3 to 5 days, an operation for spouting fruiting body was performed by irradiation with light of 1300 lux or more only during the day. Next, the medium was moved to a growing house having a temperature of 18 to 20°C and a humidity of 95% or more to develop fruiting bodies. The fruiting bodies were harvested around the time of growth before and after the formation of pores on the back side of the pileus. An outline of the steps of culture, harvesting, and immersion is illustrated in Fig. 10(a).

### (Investigation of yield amount of fruiting bodies)

The yield amount (g) and the cultivation period of the harvested fruiting bodies were measured.

The results are shown in Fig. 10(b). The yield amount of fruiting bodies increased (129%) in the case of cultivation in the Ku Ding tea processed product-mixed medium as compared with the control group to which no processed product of Ku Ding tea was added. Further, the cultivation period was shortened from 63 days to 61 days (97%) (not shown). This has been shown that the use of the processed product of Ku Ding tea of the present Example increases the amount of fruiting bodies developed of hen-of-the-woods and shortens the cultivation period.

Saponin, which is a component contained in green tea, black tea, oolong tea, and the like, is known to increase the number of fruiting bodies of oyster mushrooms, but formation of a pileus is suppressed (Yumi MAGAE, Mushroom Science and Biotechnology, Vol. 20(4), 193 to 198, 2013), and thus, in the known technique, high-quality mushrooms are not obtained even when fruiting body formation is promoted. On the other hand, as described above, fruiting bodies of mushrooms having a large size and having a high commercial value were obtained by the processed product of Ku Ding tea of the present Example, and thus it has been proved that the effect of improving the quality of fruiting bodies of mushrooms, which is different from the known technique, is exhibited.

Note that various embodiments and modifications can be made without departing from the spirit and scope of the present invention in a broad sense. In addition, the above-described embodiments are for describing the present invention, and do not limit the scope of the present invention. That is, the scope of the present invention is defined not by the embodiments but by the claims. Various modifications made within the scope of the claims and the meaning of the invention equivalent thereto are regarded as being within the scope of the present invention.

The present invention is based on Japanese Patent Application No. 2022-053195 filed on March 29, 2022. The entire specification, claims, and drawings of Japanese Patent Application No. 2022-053195 are incorporated herein by reference.

## Claims

1. An additive for a mushroom cultivation medium, comprising a processed product of Ku Ding tea.

2. The additive for a mushroom cultivation medium according to claim 1, being for promoting growth of a mycelium of a mushroom.

3. The additive for a mushroom cultivation medium according to claim 1, being for improving quality of a fruiting body of a mushroom.

4. The additive for a mushroom cultivation medium according to claim 1, being for increasing an amount of developed fruiting bodies of mushrooms.

5. The additive for a mushroom cultivation medium according to any one of claims 1 to 4, wherein the Ku Ding tea is selected from the group consisting of Ligustrum purpurascens Y. C. Yang., Ligustrum pedunculare Rehd., Ligustrum japonicum var. pubescens Koidz, Ligustrum robstum (Roxb.) Bl., Ilex cornuta Lindl. ex Paxt., Ilex kudingcha C. J. Tseng., Ilex latifolia Thunb., Cratoxylum prunifolium (Kurz) Dyer, Ehretia thyrsiflora (Sieb. et Zucc.) Nakai, and Photinia serrulata Lindl.

6. The additive for a mushroom cultivation medium according to claim 1, wherein the mushroom is selected from the group consisting of shiitake mushroom, enokitake mushroom, Pholiota aurivella, Sarcomyxa serotina, Pleurotus pulmonarius, Ganoderma applanatum, oyster mushroom, golden oyster mushroom, pink oyster mushroom, Lepista sordida, Hypsizygus marmoreus, eryngii mushroom, Jew's Ear Fungus, butterscotch mushroom, hen-of-the-woods, common mushroom, Lyophyllum decastes, Mycoleptodonoides aitchisonii, Hypholoma sublateritium, Lion's mane mushroom, Cyclocybe aegerita, Ganoderma lucidum (Leyss. ex. Fr.) Karst, Pleurotus sajo-caju (Fr.), Trametes versicolor, Sparassis crispa, Tricholoma bakamatsutake, Agaricus subrufescens, Morchella esculenta var. esculenta, and Inonotus obliquus.

7. A mushroom cultivation medium, to which the additive for a mushroom cultivation medium according to claim 1 is added.

8. A method for cultivating a mushroom, comprising a step of culturing a mycelium of a mushroom using the mushroom cultivation medium according to claim 7.

9. A method for cultivating a mushroom, comprising a step of developing a fruiting body of a mushroom using the mushroom cultivation medium according to claim 7.

10. An additive for a basidiomycete culture medium, comprising a processed product of Ku Ding tea.

11. The additive for a basidiomycete culture medium according to claim 10, being for promoting growth of a mycelium of a basidiomycete.

12. The additive for a basidiomycete culture medium according to claim 10 or 11, wherein the Ku Ding tea is selected from the group consisting of Ligustrum purpurascens Y. C. Yang., Ligustrum pedunculare Rehd., Ligustrum japonicum var. pubescens Koidz, Ligustrum robstum (Roxb.) Bl., Ilex cornuta Lindl. ex Paxt., Ilex kudingcha C. J. Tseng., Ilex latifolia Thunb., Cratoxylum prunifolium (Kurz) Dyer, Ehretia thyrsiflora (Sieb. et Zucc.) Nakai, and Photinia serrulata Lindl.

13. The additive for a basidiomycete culture medium according to claim 10, wherein the basidiomycete is selected from the group consisting of shiitake mushroom, enokitake mushroom, Pholiota aurivella, Sarcomyxa serotina, Pleurotus pulmonarius, Ganoderma applanatum, oyster mushroom, golden oyster mushroom, pink oyster mushroom, Lepista sordida, Hypsizygus marmoreus, eryngii mushroom, Jew's Ear Fungus, butterscotch mushroom, hen-of-the-woods, common mushroom, Lyophyllum decastes, Mycoleptodonoides aitchisonii, Hypholoma sublateritium, Lion's mane mushroom, Cyclocybe aegerita, Ganoderma lucidum (Leyss. ex. Fr.) Karst, Pleurotus sajo-caju (Fr.), Trametes versicolor, Sparassis crispa, Tricholoma bakamatsutake, Agaricus subrufescens, and Inonotus obliquus.

14. A basidiomycete culture medium, to which the additive for a basidiomycete culture medium according to claim 10 is added.

15. A method for culturing a basidiomycete, comprising a step of culturing a mycelium of a basidiomycete using the basidiomycete culture medium according to claim 14.
